# EUROPEAN PATENT APPLICATION

(11) **EP 4 406 838 A1**
(43) Date of publication of application: **31.07.2024**
(21) Application number: 23212472.7
(22) Date of filing: 27.11.2023
(51) Int. Cl.: B64D 11/02, E03D 11/12, A47K 1/04, B60R 15/00, E03C 1/18

(54) **ADAPTABLE LAVATORY FOR AN INTERNAL CABIN OF A VEHICLE**

(30) Priority: 25.01.2023 US 202318159143
(71) Applicant: The Boeing Company, Arlington, VA 22202 (US)
(72) Inventor: VANDEWALL, Cynthia, Arlington, 22202 (US); BOWEN, Jared, Arlington, 22202 (US); ROBLEDO, Alejandro Lozano, Arlington, 22202 (US); RAMIREZ LOAIZA, Juan Sebastian, Arlington, 22202 (US); RICH, Haley, Arlington, 22202 (US)
(74) Representative: Bryn-Jacobsen, Caelia

(57) **Abstract**

An enclosed space, such as a lavatory within an internal cabin of a vehicle, includes one or both of: (a) a toilet moveably secured to one or both of a floor or one or more walls, wherein the toilet is configured to be moved between a toilet deployed position and a toilet retracted position, and/or (b) a sink moveably secured to one or both of the floor or the one or more walls, wherein the sink is configured to be moved between a sink deployed position and a sink retracted position.

## Description

### FIELD OF THE DISCLOSURE

Examples of the present disclosure generally relate to adaptable lavatories, as can be used within internal cabins of a vehicles, such as commercial aircraft.

### BACKGROUND OF THE DISCLOSURE

Aircraft are used to transport passengers and cargo between various locations. Numerous aircraft depart from and arrive at a typical airport every day.

Various aircraft include one or more lavatories within an internal cabin. A typical lavatory within an internal cabin is often limited in space. A toilet within the lavatory occupies a substantial amount of space. Further, a sink within the lavatory also occupies space therein. The toilet and the sink extend inwardly into the space of the lavatory. As such, actions of individuals within the lavatory are restricted by the toilet and the sink. As an example, an individual may find that the cramped space within a lavatory leads to difficulties in changing diapers of a baby, assisting a young child within the lavatory, and/or the like. As another example, an individual of reduced mobility may have difficulty moving into and out of the lavatory.

### SUMMARY OF THE DISCLOSURE

A need exists for an adaptable lavatory within an internal cabin of a vehicle. Further, a need exists for a lavatory within an internal cabin that allows for greater mobility therein.

With those needs in mind, certain examples of the present disclosure provide an enclosed space, including a toilet moveably secured to one or both of a floor or one or more walls. The toilet is configured to be moved between a toilet deployed position and a toilet retracted position.

In at least one example, the enclosed space is a lavatory. In at least one further example, the lavatory is within an internal cabin of a vehicle.

In at least one example, the toilet is pivotally coupled to one or both of the floor or the one or more walls.

In at least one example, the toilet includes a bowl having a fundus shape.

In at least one example, the toilet pivotally couples to the one or more walls by a pivot axle. In at least one further example, the pivot axle includes a gear that is configured to cooperate with a reciprocal gear that is on or within the one or more walls.

In at least one example, the enclosed space also includes a sink moveably secured to one or both of the floor or the one or more walls. The sink is configured to be moved between a sink deployed position and a sink retracted position.

In at least one example, the sink is configured to inflate into the sink deployed position, and deflate into the sink retracted position.

In at least one example, the sink includes a flexible outer main body defining an internal cavity, and an inflatable fluid circuit within the internal cavity. The inflatable fluid circuit is configured to be in fluid communication with a fluid source.

In at least one example, at least a portion of the sink is formed of a transparent thermoplastic polyurethane (TPU). The TPU can be embedded with an antimicrobial agent.

Certain examples of the present disclosure provide an enclosed space, including a sink moveably secured to one or both of a floor or one or more walls. The sink is configured to be moved between a sink deployed position and a sink retracted position.

Certain examples of the present disclosure provide a vehicle including an internal cabin, and a lavatory within the internal cabin. The lavatory includes a toilet moveably secured to one or both of a floor or one or more walls. The toilet is configured to be moved between a toilet deployed position and a toilet retracted position. A sink is moveably secured to one or both of the floor or the one or more walls. The sink is configured to be moved between a sink deployed position and a sink retracted position.

In at least one example, the lavatory provides: a first floor plan when the toilet is in the toilet deployed position, and the sink is in the sink deployed position, a second floor plan when the toilet is in the toilet retracted position, and the sink in the sink retracted position, a third floor plan when the toilet is in the toilet deployed position, and the sink is in the sink retracted position, and a fourth floor plan when the toilet is in the toilet retracted position, and the sink is in the sink deployed position.

Certain examples of the present disclosure provide a method, including moveably securing a toilet to one or both of a floor or one or more walls of an enclosed space within an internal cabin of a vehicle, wherein the toilet is configured to be moved between a toilet deployed position and a toilet retracted position; and moveably securing a sink to one or both of the floor or the one or more walls, wherein the sink is configured to be moved between a sink deployed position and a sink retracted position.

### BRIEF DESCRIPTION OF THE DRAWINGS

Figure 1 illustrates a simplified block diagram of a lavatory within an internal cabin of a vehicle, according to an example of the present disclosure.
Figure 2 illustrates a perspective front view of an aircraft, according to an example of the present disclosure.
Figure 3 illustrates a perspective internal view of a lavatory, according to an example of the present disclosure.
Figure 4 illustrates a transverse cross-sectional view of a toilet in a deployed position, according to an example of the present disclosure.
Figure 5 illustrates a transverse cross-sectional view of the toilet of Figure 4 in a retracted position, according to an example of the present disclosure.
Figure 6 illustrates a perspective view of a pivot axle, according to an example of the present disclosure.
Figure 7 illustrates a perspective front view of a sink in a deployed position, according to an example of the present disclosure.
Figure 8 illustrates a perspective partial internal view of the sink of Figure 7, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide an adaptable lavatory concept that allows for certain items to be moved to allow for greater access and movement therein. The internal space of the lavatory can be arranged to better support a variety of activities (for example, breastfeeding, stretching, calming down from stress, changing clothing, and/or the like). The lavatories described herein provide well-being and privacy options for passengers who desire and/or need to take particular actions during flight, including breastfeeding a child during flight, stretching (for example, passengers who are susceptible to blood clotting), calming (for example, individuals suffering from anxiety flight), and the like.

The lavatories described herein also provide a more open internal space. While traditional lavatories have fixed sinks and toilets, examples of the lavatories described herein include moveable components, such as sinks and toilets, that allow for selective movement to provide additional space. In at least one example, a toilet is foldable in order to open up space for people to perform different activities. When the toilet folds up, any residual liquids left in the toilet are retained therein to avoid any unsanitary liquids being exposed.

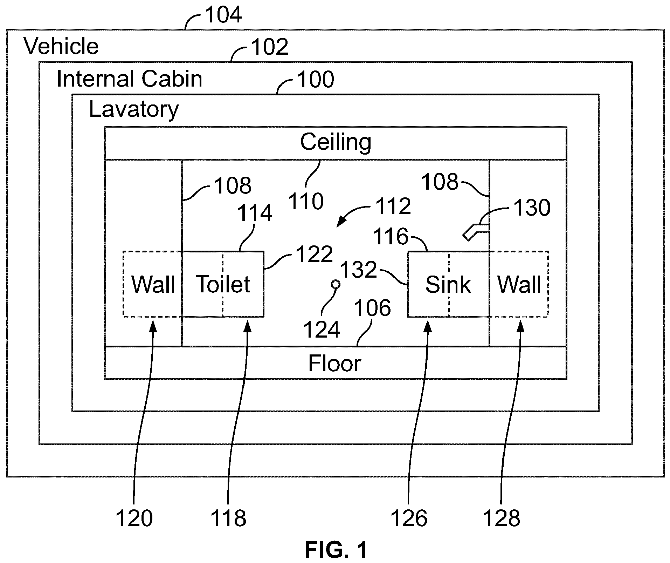

Figure 1 illustrates a simplified block diagram of a lavatory 100 within an internal cabin 102 of a vehicle 104, according to an example of the present disclosure. In at least one example, the vehicle 104 is an aircraft, such as a commercial jet. In at least one other example, the vehicle 104 can be a land-based vehicle, such as a bus, train car, or the like. As another example, the vehicle 104 can be a water-based vehicle, such as a ship or boat. As another example, the vehicle 104 can be a spacecraft.

The lavatory 100 includes a floor 106, one or more walls 108, and a ceiling 110. An internal space 112 is defined between the floor 106, the walls 108, and the ceiling 110. A toilet 114 is supported by at least one wall 108 and/or the floor 106. Similarly, a sink 116 is supported by at least one wall 108 and/or the floor 106. The toilet 114 can be coupled to a first wall 108, and the sink 116 can be coupled to a second wall 108 that differs from the first wall 108. Optionally, the toilet 114 and the sink 116 can be coupled to the same wall 108.

The lavatory 100 is an example of an enclosed space within the internal cabin 102. Optionally, instead of a lavatory 100, certain examples of the present disclosure can be used with other types of enclosed spaces, such as galleys, food preparation areas, hand washing stations, and/or the like. For example, examples of the present disclosure provide an enclosed space (such as a lavatory, galley, room, or the like) that includes a sink configured to be selectively moved between a deployed position and a retracted position, as described herein.

In at least one example, the toilet 114 is moveably coupled to a wall 108 and/or the floor 106. For example, the toilet 114 can be pivotally secured to the wall 108. As another example, the toilet 114 can be slidably secured to the wall 108. The toilet 114 is configured to be selectively moved between a deployed position 118 (a toilet deployed position) and a retracted position 120 (a toilet retracted position). In the deployed position 118, the toilet 114 is configured to allow an individual to sit on a cover or seat of the toilet 114. In the retracted position 120, an individual is unable to sit on the cover or the seat of the toilet 114.

In the deployed position 118, a distal end 122 of the toilet 114 extends outwardly toward a center 124 of the internal space 112 of the lavatory 100. Conversely, in the retracted position 120, the distal end 122 of the toilet 114 is inwardly receded from the center 124 of the internal space 112.

In at least one example, the toilet 114 is pivotally coupled to the wall 108, and is configured to pivotally fold in relation to the wall 108. For example, in the deployed position 118, the toilet 114 is in an outwardly unfolded position such that the distal end 122 extends outwardly toward the center 124. Conversely, in the retracted position, the toilet 114 is upwardly folded, such that the distal end 122 extends upwardly toward the ceiling 110 away from the center 124.

As another example, the toilet 114 can be slidably coupled to the wall 108. For example, the toilet 114 can be configured to linearly slide inwardly into the wall 108 into the retracted position 120, and outwardly away from the wall 108 into the deployed position 118. As another example, the toilet 114 can be configured to vertically slide in relation to the wall 108 between the deployed position 118 and the retracted position 120.

As another example, the toilet 114 can be configured to inwardly and outwardly telescope. For example, the toilet 114 can be configured to outwardly telescope into the deployed position 118, and inwardly telescope into the retracted position 120. As another example, the toilet 114 can be formed of a flexible material, and configured to inflate into the deployed position 118, and deflated into the retracted position 120.

In at least one example, the sink 116 is moveably coupled to a wall 108 and/or the floor 106. For example, the sink 116 can be formed of a flexible, inflatable material and configured to be inflated and deflated. As another example, the sink 116 can be pivotally secured to the wall 108. As another example, the sink 116 can be slidably secured to the wall 108. The sink 116 is configured to be selectively moved between a deployed position 126 (a sink deployed position) and a retracted position 128 (a sink retracted position). In the deployed position 126, the sink 116 is configured to receive and retain water from a faucet 130 (and allow the water to pass through a drain at a bottom basin of the sink 116). In the retracted position 128, a water-retaining capacity of the sink 116 is reduced compared to when the sink 116 is in the deployed position 126.

In the deployed position 128, a distal end 132 of the toilet 114 extends outwardly toward the center 124 of the internal space 112 of the lavatory 100. Conversely, in the retracted position 128, the distal end 132 of the sink 116 is inwardly receded from the center 124 of the internal space 112.

In at least one example, the sink 116 is configured to inflate into the deployed position 126, and deflate into the retracted position 128. As another example, the sink 116 can be pivotally coupled to the wall 108, and configured to pivotally fold in relation to the wall 108. As another example, the sink 116 can be slidably coupled to the wall 108. For example, the sink 116 can be configured to linearly slide inwardly into the wall 108 into the retracted position 128, and outwardly away from the wall 108 into the deployed position 128. As another example, the sink 116 can be configured to vertically slide in relation to the wall 108 between the deployed position 126 and the retracted position 128. As another example, the sink 116 can be configured to inwardly and outwardly telescope between the deployed position 126 and the retracted position 128.

In operation, if an individual desires increased space to move within the internal space 112 of the lavatory 100, the toilet 114 can be moved from the deployed position 118 to the retracted position 120. Similarly, the sink 116 can be moved from the deployed position 126 to the retracted position 128. If the individual needs to use the toilet 114, the toilet 114 can then be moved from the retracted position 120 to the deployed position 118. Similarly, if the individual needs to use the sink 116, the sink 116 can be moved from the retracted position 128 to the deployed position 126.

As described herein, examples of the present disclosure provide an enclosed space, such as the lavatory 100, a galley, or the like. In at least one example, the enclosed space includes the toilet 114 moveably secured to one or more walls 108 and/or the floor 106. The toilet 114 is configured to be moved between a toilet deployed position 118 and a toilet retracted position 120. In at least one other example, the enclosed space includes the sink 116 (and optionally, the toilet 114) moveably secured to the one or more walls 108 and/or the floor 106. The sink 116 is configured to be moved between a sink deployed position 126 and a sink retracted position 128. In at least one example, the enclosed space is within an internal cabin 102 of a vehicle 104.

As described herein, examples of the present disclosure provide a method, including moveably securing the toilet 114 to one or both of the floor 106 or one or more walls 108 of an enclosed space (such as the lavatory 100) within the internal cabin 102 of the vehicle 104. The toilet 114 is configured to be moved between the toilet deployed position 118 and the toilet retracted position 120. In at least one example, optionally or additionally, the method includes moveably securing the sink 116 to one or both of the floor 106 or the one or more walls 108. The sink 116 is configured to be moved between the sink deployed position 126 and the sink retracted position 128.

In at least one example, when the toilet 114 is in the retracted position 120, and the sink 116 is in the deployed position 126, the internal space 112 defines a first floor plan. In contrast, when the toilet 114 is in the deployed position and the sink 116 is in the retracted position 128, the internal space 112 defines a second floor plan that differs from the first floor plan. When both the toilet 114 and the sink 116 are in respective deployed positions 118 and 126, respectively, the internal space 112 defines a third floor plan that differs from the first and second floor plans. Similarly, when both the toilet and the sink 116 are in respective retracted positions 120 and 128, the internal space 112 defines a fourth floor plan that differs from each of the first, second, and third floor plans. The floor plans are three-dimensional volumetric spaces. It is to be understood that the terms, first, second, third, and fourth, are merely for labeling purposes, and that a first can be a second, third, or fourth, and vice versa.

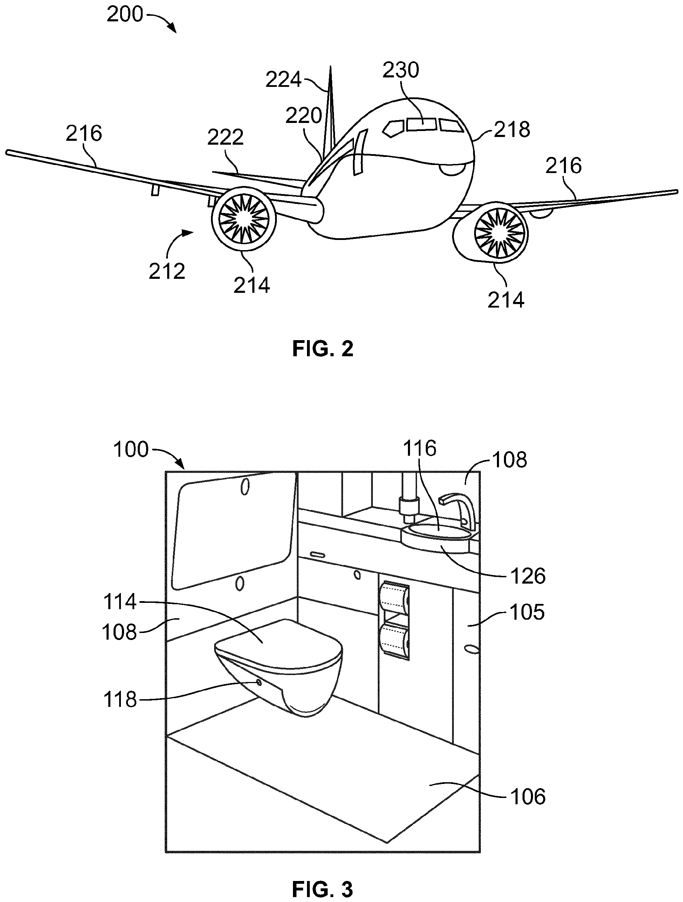

Figure 2 illustrates a perspective front view of an aircraft 200, according to an example of the present disclosure. The aircraft 200 is an example of the vehicle 104 shown in Figure 1. The aircraft 200 includes a propulsion system 212 that includes engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224.

The fuselage 218 of the aircraft 200 defines an internal cabin 230, which is an example of the internal cabin 102 shown in Figure 1. The internal cabin 230 includes a flight deck or cockpit, one or more work sections (for example, galleys, personnel carry-on baggage areas, and the like), one or more passenger sections (for example, first class, business class, and coach sections), one or more lavatories (as described herein), and/or the like.

Alternatively, instead of an aircraft, examples of the present disclosure may be used with various other vehicles, such as automobiles, buses, locomotives and train cars, watercraft (such as cruise ships), and the like. Further, examples of the present disclosure may be used with respect to fixed structures, such as commercial and residential buildings.

Figure 3 illustrates a perspective internal view of a lavatory 100, according to an example of the present disclosure. The lavatory 100 may be onboard an aircraft, as described above. Optionally, the lavatory 100 may be onboard various other vehicles. In other examples, the lavatory 100 may be within a fixed structure, such as a commercial or residential building. The lavatory 100 includes a floor 106 and walls 108 that support a toilet 114, one or more cabinets 105, and a sink 116. The lavatory 100 may be arranged differently than shown. The lavatory 100 may include more or less components than shown.

The toilet 114 is selectively moveable between a deployed position 118, and a retracted position 120, as shown and described in relation to Figure 1. Similarly, the sink 116 is selectively moveable between a deployed position 126 and a retracted position 128, as shown and described in relation to Figure 1.

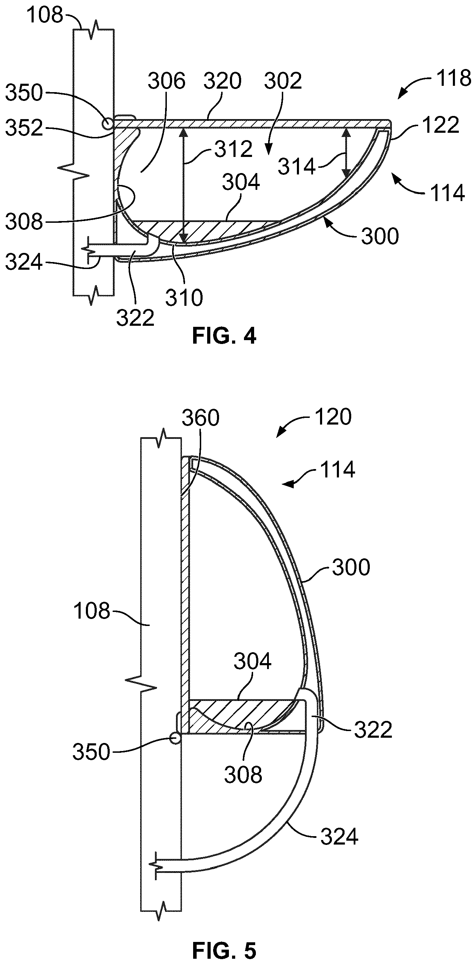

Figure 4 illustrates a transverse cross-sectional view of a toilet 114 in a deployed position 118, according to an example of the present disclosure. The toilet 114 includes a bowl 300 including an internal retention chamber 302 that retains fluid 304, such as grey water. The bowl 300 can have a fundus shape in which a proximal portion 306 has an expanded, arcuate back surface 308 connected to a lower arcuate base 310. A height 312 of the base 310 is greater proximate to the back surface 308 than a height 314 proximate to the distal end 122. A seat 320 is secured to the bowl 300. The seat 320 can be movably secured to the bowl 300.

A drain 322 extends through the base 310 proximate to the back surface 308. The drain 322 connects to a flexible conduit 324, such as a flexible tube, pipe, or the like, that connects to a waste removal tank, for example.

The toilet 114 is pivotally coupled to the wall 108. For example, a pivot axle 350 pivotally couples an upper portion of a rear of the bowl 300 to the wall 108. The pivot axle 350 allows the toilet 114 to be upwardly pivoted into a retracted position 120 (shown in Figure 5).

Figure 5 illustrates a transverse cross-sectional view of the toilet 114 of Figure 4 in the retracted position 120, according to an example of the present disclosure. In the retracted position, the toilet 114 is upwardly folded, such that an upper surface 360 of the seat 320 may be parallel with, and/or abutting, the wall 108. The flexible conduit 324 can be exposed when the toilet 114 is in the retracted position 120. Fluid 304 within the bowl 300 is retained within the arcuate back surface 308, which forms a retaining basin when the toilet 114 is in the retracted position 120. As such, the fluid 304 does not leak into the internal space 112 of the lavatory 100. The fundus shape of the bowl 300 ensures that any residual fluid 304 is retained within the bowl 300 when the toilet 114 is in the retracted position 120. The toilet 114 uses flexible pipes (such as the flexible conduit 324) and/or detachable pipes to allow movement between the deployed position 118 and the retracted position 120.

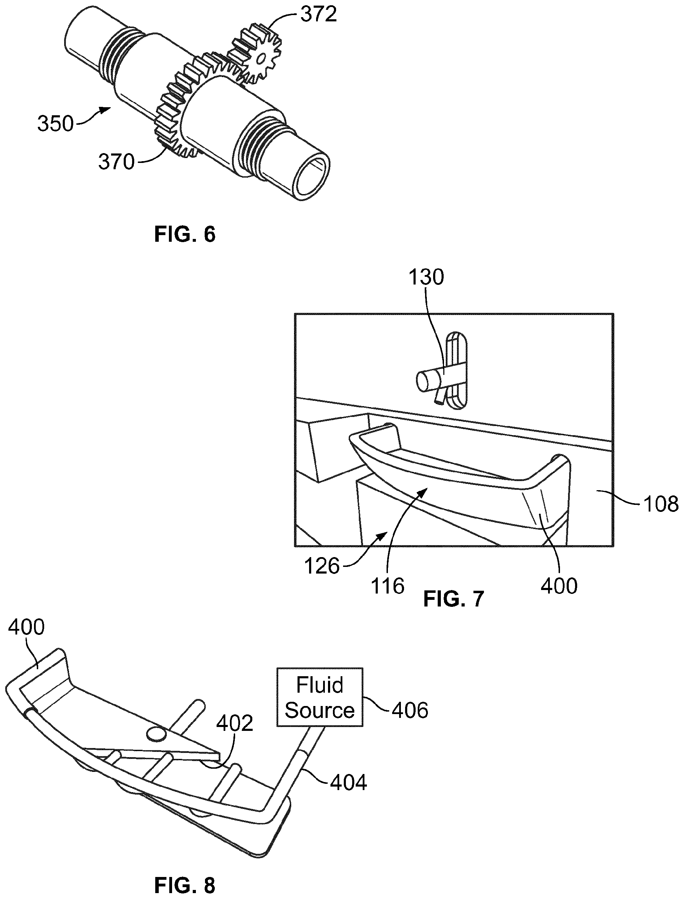

Figure 6 illustrates a perspective view of a pivot axle 350, according to an example of the present disclosure. Referring to Figures 4-6, the pivot axle 350 can extend through at least a portion of the bowl 300, and includes a gear 370 that can cooperate with a reciprocal gear 372 on and/or within the wall 108 to ensure that the toilet 114 remains in the retracted position 120, as desired. Optionally, the pivot axle 350 may not include the gear 370. As another example, the toilet 114 can be secured in the retracted position 120 through a lock, a clasp, and/or the like.

The pivot axle 350 allows the toilet 114 to rotate between the deployed position 118 and the retracted position 120. In at least one example, the toilet 114 can first outwardly translate from the deployed position 118 before pivoting upwardly into the retracted position 120. For example, the toilet 114 can first move out, fold up, and then move back in to a locked position while in the retracted position 120.

Figure 7 illustrates a perspective front view of a sink 116 in a deployed position 126, according to an example of the present disclosure. Figure 8 illustrates a perspective partial internal view of the sink 116 of Figure 7. Referring to Figures 1, 7, and 8, in at least one example, the sink 116 is configured to inflate into the deployed position 126, and deflate into the retracted position 128. In such an example, the sink 116 includes a flexible outer main body 400 defining an internal cavity 402 that retains an inflatable fluid circuit 404, such as a flexible manifold, which, in turn, is in fluid communication with a fluid source 406, such an air compressor. The fluid source 406 is configured to supply fluid, such as air, to the fluid circuit 404 to inflate the flexible outer main body 400 into the deployed position 126. Conversely, the fluid source 406 is configured to draw fluid from the fluid circuit 404 to deflate the flexible outer main body 400 into the retracted position 128.

In at least one example, the sink 116, including the flexible outer main body 400, is formed of thermoplastic polyurethane (TPU), which is hydrophobic so there is little or no risk of moisture settling into bonded seams when the sink 116 deflates. The TPU can be embedded with (and/or covered with) an antimicrobial agent, such as silver particles, which are naturally antimicrobial. Optionally, the sink 116 can be embedded with, and/or covered with other antimicrobial agents. As such, in the retracted position 128 (for example, a deflated state) the sink 116 repels moisture to avoid risk of mold growth, as well as resist microbes.

In at least one example, the sink 116, including the flexible outer main body 400, is formed of a clear, transparent plastic (such as a transparent TPU), instead of an opaque material. The plastic can be clear, not opaque, so that ultraviolet (UV) light can sanitize the silver particles within the material so the sink 116 remains sanitary and naturally antimicrobial. Optionally, the sink 116 may not be formed of a clear plastic material.

In at least one example, the sink 116 can be used in enclosed spaces other than lavatories. For example, the sink 116 as described herein can be used in galleys, hand-washing areas outside of lavatories, food preparation areas, and/or the like.

Further, the disclosure comprises examples according to the following clauses:
Clause 1. An enclosed space, comprising:
   a toilet moveably secured to one or both of a floor or one or more walls, wherein the toilet is configured to be moved between a toilet deployed position and a toilet retracted position.
Clause 2. The enclosed space of Clause 1, wherein the enclosed space is a lavatory.
Clause 3. The enclosed space of Clause 2, wherein the lavatory is within an internal cabin of a vehicle.
Clause 4. The enclosed space of any of Clauses 1-3, wherein the toilet is pivotally coupled to one or both of the floor or the one or more walls.
Clause 5. The enclosed space of any of Clauses 1-4, wherein the toilet comprises a bowl having a fundus shape.
Clause 6. The enclosed space of any of Clauses 1-5, wherein the toilet pivotally couples to the one or more walls by a pivot axle.
Clause 7. The enclosed space of any of Clauses 1-6, wherein the pivot axle comprises a gear that is configured to cooperate with a reciprocal gear that is on or within the one or more walls.
Clause 8. The enclosed space of any of Clauses 1-7, further comprising a sink moveably secured to one or both of the floor or the one or more walls, wherein the sink is configured to be moved between a sink deployed position and a sink retracted position.
Clause 9. The enclosed space of Clause 8, wherein the sink is configured to inflate into the sink deployed position, and deflate into the sink retracted position.
Clause 10. The enclosed space of Clauses 8 or 9, wherein the sink comprises:
   a flexible outer main body defining an internal cavity; and
   an inflatable fluid circuit within the internal cavity, wherein the inflatable fluid circuit is configured to be in fluid communication with a fluid source.
Clause 11. The enclosed space of any of Clauses 8-10, wherein at least a portion of the sink is formed of a transparent thermoplastic polyurethane (TPU).
Clause 12. The enclosed space of Clause 11, wherein the TPU is embedded with an antimicrobial agent.
Clause 13. An enclosed space, comprising:
   a sink moveably secured to one or both of a floor or one or more walls, wherein the sink is configured to be moved between a sink deployed position and a sink retracted position.
Clause 14. The enclosed space of Clause 13, wherein the enclosed space is a lavatory.
Clause 15. The enclosed space of Clause 14, wherein the lavatory is within an internal cabin of a vehicle.
Clause 16. The enclosed space of any of Clauses 13-15, wherein the sink is configured to inflate into the sink deployed position, and deflate into the sink retracted position.
Clause 17. The enclosed space of any of Clauses 13-16, wherein the sink comprises:
   a flexible outer main body defining an internal cavity; and
   an inflatable fluid circuit within the internal cavity, wherein the inflatable fluid circuit is configured to be in fluid communication with a fluid source.
Clause 18. The enclosed space of Clause 17, wherein at least a portion of the sink is formed of a transparent thermoplastic polyurethane (TPU).
Clause 19. The enclosed space of Clause 18, wherein the TPU is embedded with an antimicrobial agent.

Clause 20. A vehicle comprising:
an internal cabin; and
a lavatory within the internal cabin, wherein the lavatory comprises:
   a toilet moveably secured to one or both of a floor or one or more walls, wherein the toilet is configured to be moved between a toilet deployed position and a toilet retracted position; and
   a sink moveably secured to one or both of the floor or the one or more walls, wherein the sink is configured to be moved between a sink deployed position and a sink retracted position.
Clause 21. The vehicle of claim 20, wherein the lavatory provides:
   a first floor plan when the toilet is in the toilet deployed position, and the sink is in the sink deployed position,
   a second floor plan when the toilet is in the toilet retracted position, and the sink in the sink retracted position,
   a third floor plan when the toilet is in the toilet deployed position, and the sink is in the sink retracted position, and
   a fourth floor plan when the toilet is in the toilet retracted position, and the sink is in the sink deployed position.
Clause 22. A method, comprising:
   moveably securing a toilet to one or both of a floor or one or more walls of an enclosed space within an internal cabin of a vehicle, wherein the toilet is configured to be moved between a toilet deployed position and a toilet retracted position; and
   moveably securing a sink to one or both of the floor or the one or more walls, wherein the sink is configured to be moved between a sink deployed position and a sink retracted position.

As described herein, examples of the present disclosure provide an adaptable lavatory within an internal cabin of a vehicle. Further, examples of the present disclosure provide a lavatory within an internal cabin that allows for greater mobility therein.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. An enclosed space, comprising:
a toilet moveably secured to one or both of a floor or one or more walls, wherein the toilet is configured to be moved between a toilet deployed position and a toilet retracted position.

2. The enclosed space of claim 1, wherein the enclosed space is a lavatory.

3. The enclosed space of claim 2, wherein the lavatory is within an internal cabin of a vehicle.

4. The enclosed space of any one of claims 1-3, wherein the toilet is pivotally coupled to one or both of the floor or the one or more walls; or optionally
wherein the toilet comprises a bowl having a fundus shape; or optionally
wherein the toilet is arranged to pivotally couple to the one or more walls by a pivot axle; or optionally
wherein the pivot axle comprises a gear that is configured to cooperate with a reciprocal gear that is on or within the one or more walls.

5. The enclosed space of any eon of the preceding claims, further comprising a sink moveably secured to one or both of the floor or the one or more walls, wherein the sink is configured to be moved between a sink deployed position and a sink retracted position.

6. The enclosed space of claim 5, wherein the sink is configured to inflate into the sink deployed position, and deflate into the sink retracted position; or optionally
wherein the sink comprises:
a flexible outer main body defining an internal cavity; and
an inflatable fluid circuit within the internal cavity, wherein the inflatable fluid circuit is configured to be in fluid communication with a fluid source.

7. The enclosed space of claim 5 or claim 6, wherein at least a portion of the sink is formed of a transparent thermoplastic polyurethane (TPU).

8. The enclosed space of claim 7, wherein the TPU is embedded with an antimicrobial agent.

9. An enclosed space, comprising:
a sink moveably secured to one or both of a floor or one or more walls, wherein the sink is configured to be moved between a sink deployed position and a sink retracted position.

10. The enclosed space of claim 9, wherein the enclosed space is a lavatory; and optionally
wherein the lavatory is within an internal cabin of a vehicle.

11. The enclosed space of claim 9 or claim 10, wherein the sink is configured to inflate into the sink deployed position, and deflate into the sink retracted position.

12. The enclosed space of any one of claims 9-12, wherein the sink comprises:
a flexible outer main body defining an internal cavity; and
an inflatable fluid circuit within the internal cavity, wherein the inflatable fluid circuit is configured to be in fluid communication with a fluid source; and optionally
wherein at least a portion of the sink is formed of a transparent thermoplastic polyurethane (TPU); and optionally
wherein the TPU is embedded with an antimicrobial agent.

13. A vehicle comprising:
an internal cabin; and
a lavatory within the internal cabin, wherein the lavatory comprises:
a toilet moveably secured to one or both of a floor or one or more walls, wherein the toilet is configured to be moved between a toilet deployed position and a toilet retracted position; and
a sink moveably secured to one or both of the floor or the one or more walls, wherein the sink is configured to be moved between a sink deployed position and a sink retracted position.

14. The vehicle of claim 13, wherein the lavatory provides:
a first floor plan when the toilet is in the toilet deployed position, and the sink is in the sink deployed position,
a second floor plan when the toilet is in the toilet retracted position, and the sink in the sink retracted position,
a third floor plan when the toilet is in the toilet deployed position, and the sink is in the sink retracted position, and
a fourth floor plan when the toilet is in the toilet retracted position, and the sink is in the sink deployed position.

15. A method, comprising:
moveably securing a toilet to one or both of a floor or one or more walls of an enclosed space within an internal cabin of a vehicle, wherein the toilet is configured to be moved between a toilet deployed position and a toilet retracted position; and
moveably securing a sink to one or both of the floor or the one or more walls, wherein the sink is configured to be moved between a sink deployed position and a sink retracted position.
